# EUROPEAN PATENT SPECIFICATION

(11) **EP 1 230 180 B1**
(45) Date of publication and mention of the grant of the patent: **21.03.2007**
(21) Application number: 00969526.3
(22) Date of filing: 20.10.2000
(51) Int. Cl.: C03B 40/00, C03B 9/48, C23C 4/08

(54) **A COATED MOULD AND PROCESS FOR PRODUCING THE MOULD**
EINE BESCHICHTETE FORM UND VERFAHREN ZU IHRER HERSTELLUNG
MOULE REVETU ET SON PROCEDE DE PRODUCTION

(30) Priority: 22.10.1999 GB 9924940; 09.05.2000 GB 0011004
(43) Date of publication of application: 14.08.2002
(73) Proprietor: Castolin Eutectic International S.A., 1001 Lausanne (CH)
(72) Inventor: SUTHERLAND, Neil, Telford Shropshire TF7 4PP (GB)
(74) Representative: Staudt, Armin Walter
(86) International application number: PCT/EP2000/010368
(87) International publication number: WO 2001/028942

(56) References cited:
- EP-A- 0 468 277
- EP-A- 0 491 039
- DE-A- 4 134 134
- DE-A- 19 823 710
- FR-A- 2 700 554
- GB-A- 1 333 055
- GB-A- 2 130 242
- US-A- 5 268 045
- US-A- 5 628 807
- PATENT ABSTRACTS OF JAPAN vol. 6, no. 23, 10 February 1982 (1982-02-10) -& JP 56 141922 A (WORLD METAL CO. LTD. ET AL.), 5 November 1981 (1981-11-05)
- DISAM J ET AL: "LOW PRESSURE PLASMA SPRAYED COATINGS OF UDIMET 700 AND HASTELLOY C-276 IN THE MANUFACTURE OF OPTICAL AND INDUSTRIAL SPECIALTY-GLASS PRODUCTS: PREPARATION AND APPLICATIONS" PROCEEDINGS OF THE NATIONAL THERMAL SPRAY CONFERENCE, US, METALS PARK, ASM INTERNATIONAL, 24 October 1988 (1988-10-24), pages 353-361, XP000146291
- DELORO STELLITE: "Hard Surface Alloy Consumables" * the whole document *

## Description

This invention relates to a mould for use in the production of glass containers such as bottles, jars or the like. And the invention relates to a process for producing such a mould.

Glass articles can be produced simply and quickly on an industrial scale by blowing air into a gob of molten glass, often provided on the end of a tube down which air can pass.

To provide accurate control of the shape of the finished article it is blown whilst placed in a mould. Generally molten glass is produced in a first part of a furnace and then allowed to run into a second part of the furnace known as the working chamber where it is allowed to cool slightly. The cooled glass is then passed along a feeder channel whereafter it is formed into a gob which is passed into a rough mould. The gobs are then pressed or blown by compressed air into an intermediate shape defined by the inner surface of the mould. This is roughly the same shape as the finished container but smaller and thicker and is known as a parison. This is then pressed or blown in a finishing mould to produce the final desired shape.

Because of the very high temperatures to which the moulds are subjected as the heated glass is introduced, the high temperature gradients throughout the moulds and the rapid temperature cycling, it is common to use cast iron as the mould material, although other more expensive alloys may also be used in some cases. Cast iron is used because it is cheap and easily machined and has good heat conducting properties and can withstand relatively high temperatures.

Although it has these advantages, cast iron is limited in some respects. Firstly, at high temperatures cast iron undergoes a metallurgical change and is mechanically and thermally degraded. Secondly, when subjected to rapid thermal cycling cast iron will eventually crack. The cracking tends to develop initially on the edges of cavities but later will occur in the main body of the cavity.

Cracking results in surface imperfections in the finished glass article, which is both cosmetically unacceptable and in the case of articles such as containers introduces unacceptable structural weaknesses which are especially significant with thin walled containers.

Other limitations on the life of a mould are its ability to resist wear and to maintain its dimensions and surface finish over time. Wear is often caused by the need to clean the mould at regular intervals, perhaps by sand blasting.

To ensure crisp, clean castings and to maintain high uninterrupted production rates the cavity surfaces are sprayed or "swabbed" with release agents. This raises safety and health issues and can also result in a build up of release agents on the surface of the mould cavity. This must be periodically removed when the build up becomes too great by sandblasting.

Eventually, wear of the cavity surface, particularly at the edges together with cracking requires the mould to be taken out of production and either repaired or scrapped.

Conventionally, cast iron can be repaired using a manual oxyacetylene powder spray fuse process. The repair material is a nickel based fusible powder with excellent wetting and fusion properties and with a hardness similar to cast iron so that the mould can be accurately machined after being "patched" without the machinery tools "digging in" to the surface.

The paper of Disam J.; Wilms V. and ; Sickinger A. Editor: Houck D. L. "Thermal Spray Technology : New Ideas And Processes", Cincinnati, Oct. 24 - 27, 1988, Proceedings Of The National Thermal Spray Conference, Metals Park, ASM International, Page(S): 353-361 (Publisher Accession Number: Patent Applicant: Xp000146291) discloses a tool for manufacturing of TV panel components, partly coated on its outside by a layer made from an alloy called "UDIMET 700" consisting of 17,1 % Co, 14,8 % Cr, 4,7 % Mo, 4,1 % Al, 3,5 % Ti and 0,05 % C, the balance Ni. The melting range of the UDIMET 700 alloy is between 2210 °F and 2475 °F (corresponding to 1210 °C and 1357 °C). The tool is not showing a cavity which is adapted to receive molten glass. The UDIMET 700 alloy can be applied correctly only by a Low Pressure Plasma Spray Process (LPPS). The LPPS process is a typical single-stage process based on thermal spraying. During plasma spraying the powder is fed into the plasma stream and thereby heated to a temperature above its melting point, so that the molten powder is sprayed onto the surface resulting in a final coating of molten and solidified powder. The subsequent heat treatment over 24h at a temperature of 650 °C is a measure to enhance precipitation hardening.

EP-A-0 491 039 discloses a nickel-based alloy for making a mould. The alloy comprises nickel, cobalt, chromium and titanium. The melting points of the mould compositions suggested are characterized by solidus temperatures, which are around 1400 °C.

An object of the present invention is to provide a mould and a coating for a mould which has improved thermal properties to resist cracking and improved wear properties so as to provide an increased useful life; improved release properties which reduce frequency of swabbing; and superior surface finish of the cavity to improve the surface quality and engraving details of the glass container product.

The problems are solved by the teaching according to the independent claims. Particular developments are given in the dependent claims. Within the frame of the invention are all combinations of at least two of the descriptive elements and technical features disclosed in the claims and/or in the description.

In accordance with a first aspect of the invention, the invention provides a mould for use in the production of glass containers such as bottles, jars and the like, the mould including a cast iron body and at least one mould surface defining a cavity which is adapted to receive molten glass, and in which the mould surface is provided with a coating over substantially the whole of the surface, said coating is metallurgically bonded to the mould and it is made of an alloy having a Rockwell C hardness in the range of HRC35 to HRC50 and a fusion range of 1040° C to 1090° C, comprising by weight between 7% and 31 % cobalt, 5% to 20% chromium, 0.1 to 1 % carbon, 2.5% to 6.5% tungsten, 1.5% to 4% iron, 1.0% to 5.5% silicon and 0.5% to 3.5% boron with the balance to 100 % being nickel in the range of 40% and 75% and inevitable impurities.

The mould consists of segments preferably of two partial sections or half bodies and each half body has a hollow space or a mould-in area which completes the hollow space of the other half body to form a mould cavity.

Providing an alloy coating over the whole cavity surface has been found to enable the life of the mould to be increased considerably, compared with an uncoated mould. By the whole cavity surface, we mean substantially the whole area of the surface which, in use, contacts the hot glass. Coatings in accordance with the invention have also been found, in some cases, to produce glass containers with improved surface finish and engraved details.

Coatings produced in accordance with the invention have also required less swabbing than uncoated moulds, and in many cases the gains have been considerable.

The coating has a Rockwell C hardness in the range HRC35 to HRC50. This is significantly harder than cast iron, and so increases the wear resistance of the mould.

The alloy coating comprises an alloy of cobalt and nickel. Providing cobalt enhances the high temperature properties of the alloy as well as offering excellent coating performance during rapid temperature cycling between temperatures of 300°C and 800°C. Cobalt may be substituted - whole or partially - by chromium.

The provision of nickel in the alloy ensures that the alloy fuses to the mould body at a temperature of less than 1090 C in vacuum and may also enhance the release properties of the mould.

The alloy also includes silicon and boron. The selection of differing amounts of these elements enhances the fusion properties of the alloy and influences the hardness of the coating.

The alloy coating also includes tungsten, chromium, carbon, iron and inevitable impurities. The selection of differing amounts of one or more of these elements enables the hardness of the alloy to be maintained within the stated range whilst permitting variations in the content of nickel and cobalt.

This allows the performance of the alloy to be accurately matched with requirements of the glass container product.

The coating is fused - metallurgically bonded - to the mould. A metallurgical bond ensures that the coating will not detach from the substrate and also that good heat transfer is provided from the glass through the coating into the mould.

With regard to the process for producing a mould according to the invention, the coating is fused to the mould by using a two-stage process in which a powder containing the constituent elements of the alloy coating is initially provided. The powder may comprise a specially formulated alloy powder in which each particle essentially comprises the elements of the final alloy coating. Alternatively, it may comprise one or more different powders which may be mixed together. For example, one powder may comprise a nickel alloy whilst the other comprises a cobalt alloy. This creates the flexibility for powder blends based on commercially available grades. Modifying the proportion of nickel and cobalt allows the fusion temperatures to be tailored to match the properties and characteristics of the base material.

In a first stage of the process, the powder of the alloy is applied to the cavity surface of the mould by thermal spraying. This may either be using oxyacteylene spraying or high velocity oxy fuel spraying. Of course, the skilled man will readily appreciate that other techniques are suitable, such as laser powder coating, plasma transferred arc or other welding techniques.

In a second stage of the process, the sprayed mould is raised to an elevated temperature of 1045°C to 1085°C under vacuum in a furnace. The temperature should be raised to such a point that the coating fuses to the mould to form a metallurgical bond and to create a uniform, densified fine coating with no interconnected porosity. Of course, the coating could be fused by alternate techniques such as flame, induction, arc or laser heating processes. Vacuum furnace fusion is the favoured method due to its degree of control of temperature at critical times in the process, resulting in a coating which provides excellent wear and thermal shock protection, and ensures efficient heat transfer from the mould body.

The coating of the mould is an alloy comprising between 40% and 75% nickel and between 7% and 31% cobalt by weight. Preferably, it comprises between 41 % and 54% nickel and between 20% and 31 % cobalt, especially suitable for original coatings.

For an original coating, the alloy preferably comprises between 40% and 60% nickel and between 15% and 35% cobalt. It should be noted that repair material can be successfully applied to base metal as a coating.

For original coating, alloys preferably comprise between 41% and 54% nickel and between 20% and 31% cobalt. Alloys with these narrower ranges of constituents have been found especially beneficial as original coatings.

By providing a coating containing both nickel and cobalt in significant proportions, a considerable increase in the life of the mould can be achieved over a conventional uncoated or repaired mould. The coating offers excellent performance in temperatures between 300°C and 800°C during rapid cycling of temperature. It also provides the benefits of reduced swabbing and improved surface quality of the glass container product.

The coating also includes the elements tungsten, chromium, carbon iron, boron and silicon. Cobalt may be substituted partially, by chromium.

The coating has a Rockwell C hardness of substantially between 35 HRC and 50 HRC.

Preferably, the coating initially comprises a powder. The powder may be specially formulated and manufactured or may be prepared by thoroughly mixing two or more commonly available powders. For example, a suitable powder may be produced by mixing a cobalt powder available under the name EMP 1170 available from Castolin with a nickel powder available under the name PE 8040 from Castolin. Other cobalt powders are available under the name CO 451 from Osprey Metals Ltd., Red Jacket Works, Midlands Road, Neath, West Glamorgan, SA11 1NS, England, nickel powders under the name MHA#40 available from Mitsubishi Materials Corporation.

The ratio of nickel to cobalt in the coating may be selected such that the coating will fuse to a substrate at a temperature of between 1010° C and 1090°C. This powder may therefore be initially thermally sprayed onto the base mould (for example using an oxyacetylene or high velocity oxy fuel spray gun) and then heated to a temperature of 1045°C to 1085°C, preferably 1050°C to 1080°C, - depending on vacuum - to fuse it to the mould. This produces a metallurgical bond that ensures the coating will not detach from the substrate and improves heat transfer from coating to mould.

An advantage of the use of a nickel/cobalt coating over, for example, a nickel coating is that the cobalt increases the high temperature properties of the coating. A mainly cobalt coating would, however, have a fusion point above 1100°C which is too high for use with cast iron moulds. The presence of a nickel-based alloy lowers fusion temperature.

For initial coating, and optionally repair, the balance of the coating may comprise substantially preferably 9% to 17% chromium; 0.2% to 0.8% carbon; 2.5% to 6.5% 3.0% to 4.5% tungsten; 3.0 to 3.3 % iron; 2.5% to 3.7% silicon and 1.2% to 2.1 % boron.

The finished coating after final machining - where required - may have a thickness of between 0.2 mm and 1.5 mm although 0. 5 mm to 0.8 mm is preferred. Thus, a 0.5 mm coating provides excellent levels of thermal protection and good heat transfer capabilities.

In accordance with a third aspect of the invention, the invention comprises a mould for use in producing blown glass articles, the mould having an inner coating in accordance with the second aspect of the invention.

The coating may be fused to the mould, which comprises a cast iron body. The body may be in two or more pieces which when fitted together define a cavity into which a glass gob can be blown or pressed. The coating may be restricted to those mould surfaces which are in contact with glass being processed. Coating may also be applied to seams, edges, interlocks and other areas of the mould and glass processing system to protect against thermal shock, wear, mechanical and other damage.

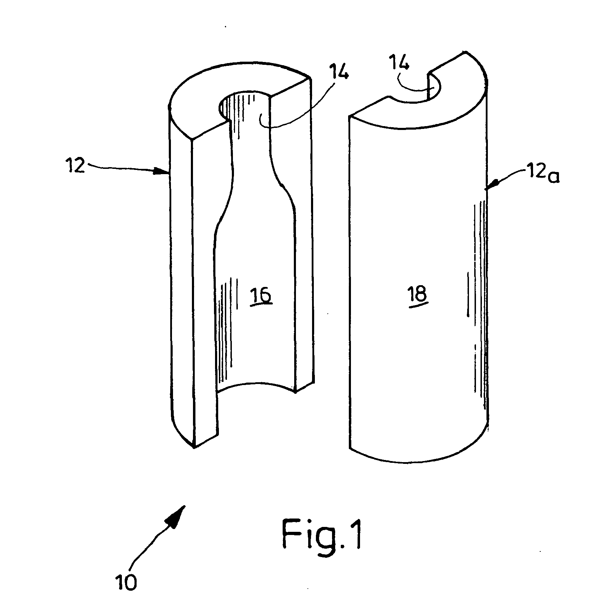

More advantages, characteristics and details of the invention and inherent to the same may be derived from the following description of only one illustrative and preferred embodiment along with the accompanying drawings, in which
- Fig. 1: shows a rough mould in accordance with the invention for use in the production of blown glass articles.

The mould 10 illustrated in Fig. 1 comprises two half bodies 12, 12ₐ which when placed together define a cavity into which a glass article -- in the mould shown a bottle -- can be blown.

Each mould half body 12, 12ₐ is moulded and machined in cast iron. The inside of each half body 12, 12ₐ is scooped, contains a cavity or a hollow space 14 and is given a smooth surface which corresponds to the shape of one half of the finished article to be produced in the mould 10. The outer form of each mould body 12, 12ₐ has an outer surface 18 which is irregular in sectional view and which is chosen to co-operate with a holder -- not shown -- which presses the bodies 12, 12ₐ together during moulding as the glass is introduced.

The smooth inner surface of each cavity 14 of the mould halfs 12, 12ₐ is covered with an alloy coating 16. The coating 16 comprises approximately 49% nickel, 26% cobalt, 13.5% chromium, 0.48% carbon, 3.5% tungsten, 2.3% iron, 3% silicon and 1.7% boron by weight.

To apply the coating 16, two different alloys in powdered form are initially thoroughly mixed. One powder is substantially a cobalt based alloy -- for example EMP 1170 from Castolin. --, the other a nickel alloy such as PE 8040 from Castolin. After mixing together, the powdered alloy is applied to the face of the mould 10 using a thermal lance or an oxyacetylene spray gun. The roughly applied coating 16 is then heated in a furnace to its fusion point of around 1060°C, whereafter it is left to cool. The coating 16 is then machined to form the finished mould.

Operational experience has shown that coated moulds 10 enjoy consderably increased life, require reduced swabbing rates and produce a glass container product with significantly enhanced surface finish. The contents of nickel and cobalt together in the coating ensure compatibility with both high termperature operation and base material requirements. The addition of cobalt enables the coating to withstand high temperatures, and the remaining nickel ensures that the alloy can be fused to the mould 10 at a sufficiently low temperature to preserve the cast irons properties.

The inclusion of hardening elements such as carbon, chromium, silicon, boron and tungsten protects the cavity surface and in particular the edges of the cavity 14 from wear during operation and cleaning.

In the event of wear of the mould and the coating, a repair may be made by fusing a patch of new coating alloy over the damaged area. In this case, a batch of alloy may be used which has a lower fusion temperature than the original (damaged) coating. This ensures that the repair coating can be heated to the fusion point without overheating the original coating. Thus, a repair material having a fusion temperature of between, say, 1030°C and 1060°C is preferred. An obvious advantage of this approach is that it obviates the need to remove the original damaged coating.

A suitable combination of original and repair material can be provided with an original coating having between 40% and 60% nickel, 15% and 35% cobalt, and a repair material having between 60% and 70% nickel and 7% to 20% cobalt.

The invention leads to improved release properties with reduced swabbing, to an improved surface finishing and an extended mould life.

## Claims

1. A mould (10) for use in the production of glass containers such as bottles, jars and the like, the mould including a cast iron body and at least one mould surface defining a cavity (14) which is adapted to receive molten glass, and in which the mould surface is provided with a coating (16) over substantially the whole of the surface, said coating is metallurgically bonded to the mould and it is made of an alloy having a Rockwell C hardness in the range of HRC35 to HRC50 and a fusion range of 1040° C to 1090° C, comprising by weight between 7% and 31% cobalt, 5% to 20% chromium, 0.1 to 1% carbon, 2.5% to 6.5% tungsten, 1.5% to 4% iron, 1.0% to 5.5% silicon and 0.5% to 3.5% boron, with the balance to 100 % being nickel in the range of 40% and 75% and inevitable impurities.

2. Mould according to claim 1 which consists of segments or partial sections with mould-in areas, which together form the mould cavity, preferably of two half bodies (12,12a) with a hollow space (14) in each segment or half body.

3. Mould according to one of the claims 1 to 2, wherein the coating (16) has a thickness of between 0.2 mm and 1.5 mm, preferably 0.5 mm to 0.8 mm.

4. Mould according to one of the claims 1 to 3, wherein the coating comprises 15% to 31% cobalt and 40% to 60% nickel by weight, preferably 20% to 31 % cobalt and 41 % to 54% nickel.

5. Mould according to one of the claims 1 to 4, wherein the coating (16) comprises by weight 9% to 17% chromium, 0.2% to 0.8% carbon, 3.0% to 4.5% tungsten, 3.0% to 3.3% iron, 2.0% to 4.5%, preferably 2.5% to 3.7%, silicon and 1.2% to 2.5%, preferably 1.2% to 2.1 %, boron.

6. Mould according to at least one of the claims 1 to 5, wherein the cavity surface and areas of the mould with no glass contact, e. g. mould hangers and interlocks, are coated.

7. Process for producing a mould according to one of the foregoing claims, wherein a coating is provided on a cast iron mould body, said coating is made of an alloy having a Rockwell C hardness in the range of HRC35 to HRC50 and a fusion range of 1040° C to 1090° C, and comprising by weight between 7% and 31% cobalt, 5% to 20% chromium, 0.1 to 1% carbon, 2.5% to 6.5% tungsten, 1.5% to 4% iron, 1.0% to 5.5% silicon and 0.5% to 3.5% boron, with the balance to 100 % being nickel in the range of 40% and 75% and inevitable impurities, whereby the coating is fused to the mould by using a two stage process wherein in the first stage a powder of the alloy is applied to the cavity surface of the mould by thermal spraying and wherein in the second stage the sprayed mould is heated to a temperature of 1045°C to 1085°C under vacuum in a furnace.

8. Process according to claim 7, wherein the powder is a specially formulated alloy powder in which each particle essentially comprises the elements of the final alloy coating or the coating is made of one or more different powders which may be mixed together.

9. Process according to claim 8, wherein one powder is a nickel alloy whilst the other powder is a cobalt alloy.

10. Process according to claim 7, wherein the thermal spraying is an oxyacetylene spraying or high velocity oxy fuel spraying.

11. Process according to claim 7, wherein the sprayed mould is heated to a temperature of 1050°C to 1080°C.

12. Process according to claim 7, wherein the powder is applied to the cavity surface and areas of the mould with no glass contact, e. g. mould hangers and interlocks.

## Patentansprüche

1. Schmelzform (10) für den Einsatz bei der Herstellung von Glasbehältern wie etwa Flaschen, Gefäßen und dergleichen, wobei die Schmelzform einen gusseisernen Körper und mindestens eine Formoberfläche aufweist, die einen für die Aufnahme von geschmolzenem Glas ausgelegten Hohlraum (14) bestimmt und die mit einer Beschichtung (16) im Wesentlichen über die gesamte Oberfläche versehen ist, wobei die Beschichtung metallurgisch mit der Schmelzform verbunden und aus einer Legierung hergestellt ist, die eine Härte nach Rockwell C im Bereich von HRC35 bis HRC50 und einen Schmelzbereich im Bereich zwischen 1040° C bis 1090° C aufweist, und die gewichtsbezogen zwischen 7 % und 31 % Kobalt, 5 % bis 20 % Chrom, 0,1 bis 1 % Kohlenstoff, 2,5 % bis 6,5 % Wolfram, 1,5 % bis 4 % Eisen, 1,0 % bis 5,5 % Silizium und 0,5 % bis 3,5 % Bor enthält, wobei der Rest zu 100 % von Nickel im Bereich von 40 % und 75 % und unvermeidlichen Verunreinigungen gebildet wird.

2. Schmelzform nach Anspruch 1, **dadurch gekennzeichnet, dass** sie aus Segmenten oder Teilstücken mit Einfüllzonen, die zusammen den FormHohlraum bilden, besteht, vorzugsweise aus zwei Halbschalen (12, 12a) mit einem Hohlraum (14) in jedem Segment oder Halbschale.

3. Schmelzform nach einem der Ansprüche 1 oder 2, **dadurch gekennzeichnet, dass** die Beschichtung (16) eine Dicke zwischen 0,2 mm und 1,5 mm, vorzugsweise zwischen 0,5 mm und 0,8 mm, aufweist.

4. Schmelzform nach einem der Ansprüche 1 bis 3, **dadurch gekennzeichnet, dass** die Beschichtung gewichtsbezogen zwischen 15 % bis 31 % Kobalt, 40 % bis 60 % Nickel, vorzugsweise 20 bis 31 % Kobalt und 41 % bis 54 % Nickel, aufweist.

5. Schmelzform nach einem der Ansprüche 1 bis 4, **dadurch gekennzeichnet, dass** die Beschichtung (16) gewichtsbezogen zwischen 9 % und 17 % Chrom, 0,2 % bis 0,8 % Kohlenstoff, 3,0 % bis 4,5 % Wolfram, 3,0 % bis 3,3 % Eisen, 2,0 % bis 4,5 % und vorzugsweise 2,5 % bis 3,7 % Silizium, sowie zwischen 1,2 % bis 2,5 % und vorzugsweise zwischen 1,2 % bis 2,1 % Bor aufweist.

6. Schmelzform nach mindestens einem der Ansprüche 1 bis 5, **dadurch gekennzeichnet, dass** diejenigen Oberfläche und Bereiche des Hohlraums der Schmelzform, die keinen Glaskontakt haben, wie beispielsweise Hängeeinrichtungen oder Verriegelungen, beschichtet sind.

7. Verfahren zur Herstellung einer Schmelzform nach einem oder der vorhergehenden Ansprüche, **dadurch gekennzeichnet, dass** auf einem gusseisernen Formkörper eine Beschichtung aufgebracht wird, die aus einer Legierung besteht, die eine Härte nach Rockwell C im Bereich von HRC35 bis HRC50 und einen Schmelzbereich im Bereich von 1040° C bis 1090° C aufweist, und die gewichtsbezogen zwischen 7 % und 31 % Kobalt, 5 % bis 20 % Chrom, 0,1 bis 1 % Kohlenstoff, 2,5 % bis 6,5 % Wolfram, 1,5 % bis 4 % Eisen, 1,0 % bis 5,5 % Silizium und 0,5 % bis 3,5 % Bor enthält, wobei der Rest zu 100 % durch Nickel im Bereich von 40 % und 75 % und unvermeidliche Verunreinigungen gebildet wird, wobei die Beschichtung unter Einsatz eines zweistufigen Prozesses auf die Schmelzform aufgeschmolzen wird, wobei im ersten Verfahrensschritt ein Pulver der Legierung auf die Oberfläche des Hohlraumes der Schmelzform durch thermisches Spritzen aufgebracht wird, und wobei im zweiten Verfahrensschritt die mit der Ausspritzschicht versehene Schmelzform auf eine Temperatur im Bereich zwischen 1045° C bis 1085° C unter Vakuum in einem Ofen erhitzt wird.

8. Verfahren nach Anspruch 7, **dadurch gekennzeichnet, dass** das Pulver ein speziell zusammengesetztes Legierungspulver ist, bei dem alle Partikel im Wesentlichen die Elemente der endgültigen Beschichtungslegierung enthalten, oder bei dem die Beschichtung aus einem oder mehreren unterschiedlichen, Pulvern, die miteinander vermischt sein können, hergestellt ist.

9. Verfahren nach Anspruch 8, **dadurch gekennzeichnet, dass** eines der Pulver eine Nickellegierung ist, wohingegen das andere Pulver eine Kobaltlegierung ist.

10. Verfahren nach Anspruch 7, **dadurch gekennzeichnet, dass** das thermische Spritzen ein autogenes Flammspritzen oder ein Hochgeschwindigkeitsflammspritzen ist.

11. Verfahren nach Anspruch 7, **dadurch gekennzeichnet, dass** die Schmelzform beim Spritzen auf eine Temperatur im Bereich zwischen 1050° C und 1080° C erhitzt wird.

12. Verfahren nach Anspruch 7, **dadurch gekennzeichnet, dass** das Pulver auf die Oberfläche des Hohlraums und die Bereiche der Schmelzform ohne Glaskontakt aufgebracht wird, wie beispielsweise Hängeeinrichtungen oder Verriegelungen.

## Revendications

1. Moule (10) destiné à la production de récipients en verre tels que les bouteilles, bocaux; etc., le moule étant constitué d'un corps en fonte et d'au moins une surface de moule délimitant une cavité (14), laquelle est prévue pour accueillir le verre fondu, et dans laquelle la surface du moule est dotée d'un revêtement (16) sur pratiquement toute la surface, ledit revêtement étant métallurgiquement collé au moule et étant constitué d'un alliage dont la dureté Rockwell C se situe entre HRC35 et HRC50 et dont la plage de fusion est de 1040°C à 1090°C, alliage constitué de 7 % à 31 % de cobalt, de 5 % à 20 % de chrome, de 0,1 % à 1 % de carbone, de 2,5 % à 6,5 % de tungstène, de 1,5 % à 4 % de fer, de 1,0 % à 5,5 % de silicium et de 0,5 % à 3,5 % de bore, le reste étant du nickel, entre 40 % et 75 %, ainsi que des impuretés inévitables.

2. Moule selon la revendication 1 **caractérisé par** des segments ou parties avec des zones moulées, lesquelles constituent ensemble la cavité du moule, constitué de préférence de deux moitiés de corps (12, 12a) et d'un espace creux (14) dans chaque segment ou moitié de corps.

3. Moule selon l'une des revendications 1 à 2, **caractérisé en ce que** le revêtement (16) présente une épaisseur comprise entre 0,2 mm et 1,5 mm, de préférence entre 0,5 mm et 0,8 mm.

4. Moule selon l'une des revendications 1 à 3, **caractérisé en ce que** le revêtement comprend une teneur de 15 % à 31 % de cobalt et de 40 % à 60 % de nickel, de préférence de 20 % à 31 % de cobalt et de 41 % à 54 % de nickel.

5. Moule selon l'une des revendications 1 à 4, **caractérisé en ce que** le revêtement (16) comprend une teneur de 9 % à 17 % de chrome, de 0,2 % à 0,8 % de carbone, de 3,0 % à 4,5 % de tungstène, de 3,0 % à 3,3 % de fer, de 2,0 % à 4,5 % - de préférence de 2,5 % à 3,7 % - de silicium et de 1,2 % à 2,5 % - de préférence de 1,2 % à 2,1 % - de bore.

6. Moule selon au moins l'une des revendications 1 à 5, **caractérisé en ce que** la surface de la cavité et les zones du moule qui n'entrent pas en contact avec le verre, par exemple les poignées du moule et les verrouillages, sont dotées d'un revêtement.

7. Procédé de production d'un moule selon l'une des revendications ci-dessus, **caractérisé en ce qu'**un revêtement est prévu sur un corps de moule en fonte, ledit revêtement étant constitué d'un alliage dont la dureté Rockwell C est située entre HRC35 et HRC50, présentant une plage de fusion entre 1040° C et 1090° C, alliage constitué de 7 % à 31 % de cobalt, de 5 % à 20 % de chrome, de 0,1 à 1 % de carbone, de 2,5 % à 6,5 % de tungstène, de 1,5 % à 4 % de fer, de 1,0 % à 5,5 % de silicium et de 0,5 % à 3,5 % de bore, le reste étant du nickel, entre 40 % et 75 %, ainsi que des impuretés inévitables, le revêtement étant fondu sur le moule au moyen d'un procédé en deux étapes, la première consistant à appliquer une poudre de l'alliage par projection thermique sur la surface de la cavité du moule , et la seconde à chauffer le moule sous vide dans un fourneau, à une température comprise entre 1045°C et 1085°C.

8. Procédé selon la revendication 7, **caractérisé en ce que** la poudre est une poudre d'alliage ayant une formulation spéciale, dans laquelle chaque particule comprend essentiellement les éléments du revêtement en alliage final ou **en ce que** le revêtement est constitué d'une ou de plusieurs poudres différentes, qui peuvent être mélangées.

9. Procédé selon la revendication 8, **caractérisé en ce qu'**une poudre est un alliage de nickel, tandis que l'autre poudre est un alliage de cobalt.

10. Procédé selon la revendication 7, **caractérisé en ce que** la projection thermique est une projection d'oxyacétylène ou une projection d'oxy-fuel à grande vitesse.

11. Procédé selon la revendication 7, **caractérisé en ce que** le moule faisant l'objet de la projection est chauffé à une température comprise entre 1050°C et 1080°C.

12. Procédé selon la revendication 7, **caractérisé en ce que** la poudre est appliquée sur la surface de la cavité et les zones du moule n'entrant pas en contact avec le verre, par exemple les poignées du moule et les verrouillages.
